# EUROPEAN PATENT APPLICATION

(11) **EP 4 712 387 A1**
(43) Date of publication of application: **18.03.2026**
(21) Application number: 23936048.0
(22) Date of filing: 09.05.2023
(51) Int. Cl.: H04L 5/00

(54) **METHOD FOR DETERMINING RESOURCE STATE, APPARATUS, AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Stöckeler, Ferdinand
(86) International application number: PCT/CN2023/093108
(87) International publication number: WO 2024/229721

(57) **Abstract**

The present disclosure relates to a method for determining a resource state, an apparatus, and a storage medium. The method comprises: determining whether a terminal sends first indication information to a network device, the first indication information being used for indicating the resource use state of at least one configured grant (CG) resource. In this way, the terminal can more flexibly send the first indication information, thereby reducing resource overhead brought by the first indication information.

## Description

### TECHNICAL FIELD

The present disclosure relates to the field of communication technologies, and in particular relates to a method and an apparatus for determining a resource state, and a storage medium.

### BACKGROUND

In a wireless communication system, in order to reduce an uplink service latency, a 3rd generation partnership project (3GPP) introduces a configured grant (CG) transmission scheme, which may also be called an uplink grant-free transmission scheme. Through the CG transmission scheme, a network device may pre-configure one or more sets of CG configurations for a terminal, and the terminal may autonomously use a wireless resource corresponding to the CG configuration for an uplink transmission without requiring scheduling by the network device, thereby saving scheduling resources and reducing uplink service latency.

### SUMMARY

The present disclosure provides a method and an apparatus for determining a resource state and a storage medium.

According to a first aspect of embodiments of the present disclosure, there is provided a method for determining a resource state, performed by a terminal, including:
determining whether the terminal sends first indication information to a network device, in which the first indication information indicates a resource usage state of at least one CG resource.

According to a second aspect of embodiments of the present disclosure, there is provided a method for determining a resource state, performed by a network device, including:
determining whether a terminal sends first indication information to the network device, in which the first indication information indicates a resource usage state of at least one CG resource.

According to a third aspect of embodiments of the present disclosure, there is provided a terminal, including:
a first processing module configured to determine whether the terminal sends first indication information to a network device, in which the first indication information indicates a resource usage state of at least one CG resource.

According to a fourth aspect of embodiments of the present disclosure, there is provided a network device, including:
a second processing module configured to determine whether a terminal sends first indication information to the network device, in which the first indication information indicates a resource usage state of at least one CG resource.

According to a fifth aspect of embodiments of the present disclosure, there is provided a communication device, including:
a processor; and
a memory for storing processor-executable instructions,
in which the processor is configured to perform the steps of the method provided in the first aspect of the present disclosure.

According to a sixth aspect of embodiments of the present disclosure, there is provided a communication device, including:
a processor; and
a memory for storing processor-executable instructions,
in which the processor is configured to perform the steps of the method provided in the second aspect of the present disclosure.

According to a seventh aspect of embodiments of the present disclosure, there is provided a computer-readable storage medium having stored thereon computer program instructions, in which the computer program instructions, when executed by a processor, implement the steps of the method provided in the first aspect of the present disclosure.

According to an eighth aspect of embodiments of the present disclosure, there is provided a computer-readable storage medium having stored thereon computer program instructions, in which the computer program instructions, when executed by a processor, implement the steps of the method provided in the second aspect of the present disclosure.

According to a ninth aspect of embodiments of the present disclosure, there is provided a communication system, including:
a terminal configured to performs the method for determining a resource state provided in the first aspect of the present disclosure; and
a network device configured to performs the method for determining a resource state provided in the second aspect of the present disclosure.

The technical solution provided by embodiments of the present disclosure may include the following beneficial effects: it is determined whether the terminal sends the first indication information to the network device, and the first indication information indicates the resource usage state of the at least one CG resource. In this way, the terminal may send the first indication information more flexibly, thereby reducing a resource overhead caused by the first indication information.

It is to be understood that both the foregoing general description and the following detailed description are exemplary and explanatory only, and shall not be construed to limit the present disclosure.

### BRIEF DESCRIPTION OF THE DRAWINGS

The accompanying drawings, which are incorporated in and constitute a part of this specification, illustrate embodiments in line with the present disclosure and, together with the description, serve to explain the principle of the present disclosure.
FIG. 1 is a schematic diagram illustrating a communication system according to an illustrative embodiment.
FIG. 2 is a flow chart illustrating a method for determining a resource state according to an illustrative embodiment.
FIG. 3 is a flow chart illustrating a method for determining a resource state according to an illustrative embodiment.
FIG. 4 is a flow chart illustrating a method for determining a resource state according to an illustrative embodiment.
FIG. 5 is a flow chart illustrating a method for determining a resource state according to an illustrative embodiment.
FIG. 6 is a flow chart illustrating a method for determining a resource state according to an illustrative embodiment.
FIG. 7 is a flow chart illustrating a method for determining a resource state according to an illustrative embodiment.
FIG. 8 is a flow chart illustrating a method for determining a resource state according to an illustrative embodiment.
FIG. 9 is a flow chart illustrating a method for determining a resource state according to an illustrative embodiment.
FIG. 10 is a flow chart illustrating a method for determining a resource state according to an illustrative embodiment.
FIG. 11 is a flow chart illustrating a method for determining a resource state according to an illustrative embodiment.
FIG. 12 is a flow chart illustrating a method for determining a resource state according to an illustrative embodiment.
FIG. 13 is a flow chart illustrating a method for determining a resource state according to an illustrative embodiment.
FIG. 14 is a flow chart illustrating a method for determining a resource state according to an illustrative embodiment.
FIG. 15 is a block diagram illustrating a terminal according to an illustrative embodiment.
FIG. 16 is a block diagram illustrating a network device according to an illustrative embodiment.
FIG. 17 is a block diagram illustrating a communication device according to an illustrative embodiment.

### DETAILED DESCRIPTION

Embodiments will be described in detail herein, examples of which are illustrated in the accompanying drawings. The following description refers to the accompanying drawings in which the same reference numerals in different drawings represent the same or similar elements unless otherwise represented. The implementations set forth in the following description of embodiments do not represent all implementations consistent with the present disclosure. Instead, they are merely examples of devices and methods consistent with some aspects of the present disclosure as detailed in the appended claims.

In the description of embodiments of the present disclosure, terms such as "first", "second" and the like are used to distinguish similar objects, and are not necessarily understood as a specific order or sequence. In addition, unless otherwise stated, in the description with reference to the drawings, the same reference numerals in different drawings represent the same elements.

In the description of embodiments of the present disclosure, unless otherwise specified, "a plurality of" refers to two or more, and other quantifiers are similar. "At least one", "one or more" or similar expressions thereof refer to any combination of these terms, including any combination of single or plural terms. For example, at least one term (s) may represent any number. For another example, one or more of a, b, and c may represent a, b, c, a-b, a-c, b-c, or a-b-c, in which a, b, c may be single or multiple. Terms "and/or" describe an association relationship of associated objects, representing that there may be three kinds of relationships. For example, A and/or B may represent three cases, that is, A alone, A and B simultaneously, and B alone, in which A, B may be singular or plural. The character "/" indicates that the associated objects before and after are in an "or" relationship. The singular forms "a", "said", "the", "the above" and "the foregoing" are also intended to include plural forms unless the context clearly indicates otherwise.

In the description of embodiments of the present disclosure, the descriptions "in a case A, in another case B" or "in response to a case A, in response to another case B" may include the following technical solutions depending on the situation: A is performed independently of B, that is, in some embodiments A; B is performed independently of A, that is, in some embodiments B; A and B are selectively executed, that is, A and B are selected to be executed in some embodiments; A and B are both executed, that is, A and B are executed in some embodiments. It is similar to the above when there are more branches such as A, B, C and the like.

In the description of embodiments of the present disclosure, terms such as "including A", "containing A", "used to indicate A", and "carrying A" may be interpreted as directly carrying A or indirectly indicating A.

In the description of embodiments of the present disclosure, terms such as "in response to ...", "in response to determining that ...", "in a case where ...", "when ...", "upon ...", "if ..." , and "in the event that" may be used interchangeably.

In some embodiments, terms such as "greater than," "greater than or equal to," "above," "higher than," "not less than," and the like may be used interchangeably, and terms such as "less than," "less than or equal to," "below," "less than," and "not greater than" may be used interchangeably.

In some embodiments, terms such as "network element", "node", "function", "apparatus", "device", "system", "chip", and "system-on-chip" may be used interchangeably.

Further, each element, each row, or each column in the table of embodiments of the present disclosure may be implemented as an independent embodiment, and any combination of any element, any row, or any column may also be implemented as an independent embodiment.

Although operations or steps are described in a particular order in embodiments of the present disclosure or in the accompanying drawings, it should not be construed as requiring that the operations or steps be performed in the particular order or serial order shown, or that all of the operations or steps shown be performed to obtain the desired result. In embodiments of the present disclosure, these operations or steps may be performed in any order without contradiction; these operations or steps may also be performed in parallel; some of these operations or steps may also be performed; the operations or steps in multiple embodiments or drawings may be arbitrarily combined, which are not limited in embodiments of the present disclosure.

It should be noted that embodiments of the present disclosure are not exhaustive but merely illustrative of some embodiments, and do not constitute specific limitations on the scope of protection of the present disclosure. With no contradiction, each step in a particular embodiment may be implemented as an independent embodiment, and steps may be arbitrarily combined. For example, a scheme obtained by removing certain steps from an embodiment may also be implemented as an independent embodiment, and the sequence of step in an embodiment may be arbitrarily swapped, and in addition, optional implementations in an embodiment may be arbitrarily combined. Furthermore, different embodiments may be arbitrarily combined, for example, partial or complete steps from different embodiments may be arbitrarily combined, and an embodiment may be arbitrarily combined with optional implementations from other embodiments.

First, the implementation environment of embodiments of the present disclosure will be described below.

The technical solutions of embodiments of the present disclosure may be applied to various communication systems. The communication system may include one or more of the 4th generation (4G) communication system, the 5th generation (5G) communication system, and other future wireless communication systems, such as a 6G communication system. The communication system may also include one or more of a public land mobile network (PLMN) network, a device-to-device (D2D) communication system, a machine-to-machine (M2M) communication system, an Internet of Things (IoT) communication system, a vehicle-to-everything (V2X) communication system, or other communication systems.

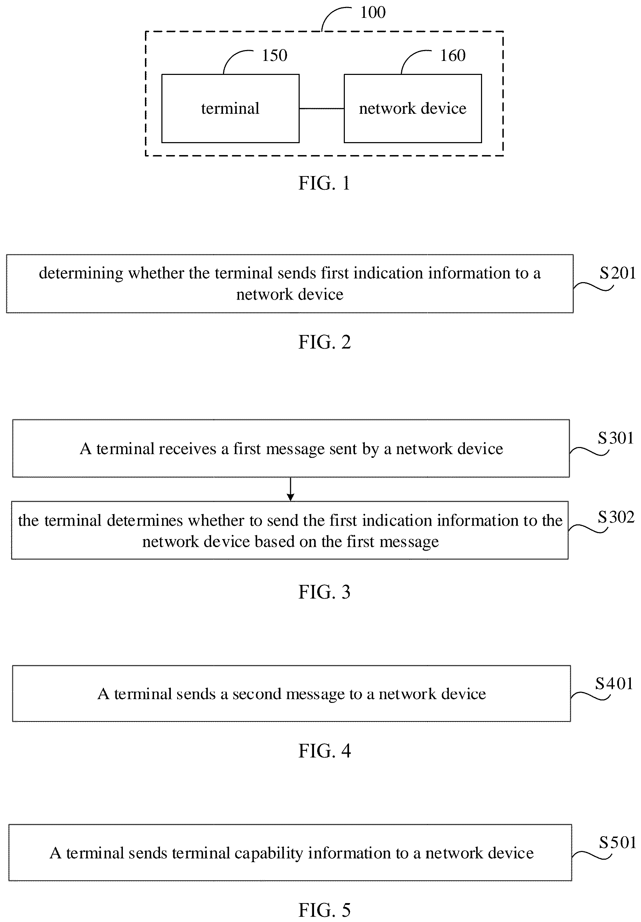

FIG. 1 is a schematic diagram illustrating a communication system 100 according to an illustrative embodiment. As shown in FIG. 1, the communication system 100 may include a terminal 150 and a network device 160. The communication system may be used to support 4G network access technologies, such as a long term evolution (LTE) access technology, or 5G network access technologies, such as a new radio access technology (New RAT), or other future wireless communication technologies. It should be noted that, in this communication system, a number of network devices and terminals may be one or more, and the number of network devices and terminals in the communication system illustrated in FIG. 1 is merely an adaptive example, which is not limited in the present disclosure.

The network device in FIG. 1 may be used to provide a wireless communication function for the terminal. For example, the network device may include an evolutional Node B (eNB or eNodeB) in LTE; the network device may also include a next generation Node B (gNB or gNodeB) in a 5G network; the network device may also include a NG-radio access network (NG-RAN) device in the 5G network; the network device may also include at least one of a base station, a broadband network gateway (BNG), an aggregation switch, or a non-3GPP access device in a future evolved public land mobile network (PLMN). Optionally, the network device in embodiments of the present disclosure may include at least one of the following various forms of base stations, such as a macro base station, a micro base station (also referred to as a small station), a relay station, an access point, a 5G base station or a future base station, a satellite, a transmitting and receiving point (TRP), a transmitting point (TP), a mobile switching center, a device-to-device (D2D), a machine-to-machine (M2M), an Internet of Things (IoT), a vehicle-to-everything (V2X), or other devices assuming the function of the base station in the communication system, which are not specifically limited in embodiments of the present disclosure. For convenience of description, in embodiments of the present disclosure, a device that provides the wireless communication function for the terminal may be referred to as the network device.

In some embodiments, the above-described network device may include a core network device and an access network device, which may also be referred to as a base station. The terminal may communicate with the core network device through the access network device.

The terminal in FIG. 1 may be an electronic device that provides voice and/or data connectivity, and may also be referred to as, for example, a user equipment (UE), a subscriber unit, a mobile station, a station, a terminal, or the like. For example, the terminal may include a smartphone, a smart wearable device, a smart speaker, a smart tablet, a wireless modem, a wireless local loop (WLL) station, a personal digital assistant (PDA), a customer premise equipment (CPE), and the like. With the development of wireless communication technology, devices that may access a communication system, communicate with the network device of the communication system, communicate with other objects through the communication system, or directly communicate between two or more devices may be the terminal in embodiments of the present disclosure, for example, terminals and cars in intelligent transportation, household devices in smart homes, power meter reading instruments in smart grids, voltage monitoring instruments, environmental monitoring instruments, video monitoring instruments in intelligent security networks, cash registers and the like. In embodiments of the present disclosure, the terminal may communicate with the network device. Communication may be performed between multiple terminals. The terminal may be statically fixed or mobile, which is not limited in embodiments of the present disclosure.

In some embodiments of the present disclosure, both the terminal and the network device may support a CG transmission scheme, and the CG transmission scheme may also be referred to as an uplink grant-free transmission scheme.

For example, the network device may configure one or more sets of CG configurations for the terminal based on the CG transmission scheme, each set of CG configurations may include one or more CG resources, and the terminal may autonomously use the CG resource to perform an uplink transmission based on the CG transmission scheme without requiring scheduling by the network device, thereby saving a scheduling resource and reducing uplink service latency. In an implementation, the CG resource may be referred to as a physical uplink shared channel (PUSCH) transmission resource (TR) of the CG (CG PUSCH TR), or may be referred to as a PUSCH transmission occasion (TO) of the CG (CG PUSCH TO), or may be referred to as a CG PUSCH occasion for short, or may be referred to as a CG TO for short. In another implementation, the CG resource may be a TO group, and one TO group may include one or more transmission occasions.

In some embodiments, each set of CG configurations may correspond to one CG period, during which the CG configuration remains effective. The number of symbols corresponding to one CG period may be a protocol-specified quantity. Optionally, the number of symbols corresponding to one CG period may be determined by the network device and sent to the terminal, for example, via a higher layer signaling from the network device to the terminal. In an implementation, one CG period may correspond to up to 14 * 40960 symbols. The higher layer signaling may be a radio resource control (RRC) signaling or other control signaling.

In some embodiments, the network device may allocate a plurality of sets of CG configurations for the terminal. For example, 16 sets of CG configurations may be configured, different CG configurations may be the same or different in the frequency domain position, and similarly, different CG configurations may be the same or different in the time domain position. For example, different CG configurations may have the same frequency domain position but different time domain positions. For another example, different CG configurations may have different frequency domain positions but the same time domain position. For another example, different CG configurations may have neither the same frequency domain position nor the same time domain position.

In embodiments of the present disclosure, the network device may allocate the CG configuration for the terminal based on the CG transmission scheme in various ways, for example:

In an implementation, the network device may send all information of the CG configuration to the terminal through a first configuration message. After receiving the first configuration message sent by the network device, the terminal autonomously uses a CG resource in the CG configuration to perform an uplink transmission. The first configuration message may be an RRC message or other message.

In another implementation, the network device may send all information of the CG configuration to the terminal through the first configuration message, and may activate the CG configuration through a second configuration message. The terminal may autonomously use the CG resource in the CG configuration to perform the uplink transmission after receiving the first configuration message and the second configuration message. The first configuration message may be the RRC message or another message sent by the network device to the terminal, and the second configuration message may be downlink control information (DCI), a medium access control control element (MAC CE), or another message sent by the network device to the terminal.

In another implementation, the network device may send part of the information of the CG configuration to the terminal through the first configuration message, send another part of the information of the CG configuration to the terminal through the second configuration message, and activate the CG configuration, thereby supplementing all the information of the CG configuration. After receiving the first configuration message and the second configuration message, the terminal may autonomously use the CG resource in the CG configuration to perform the uplink transmission.

In the related art, the management for CG resource is relatively simple and cannot meet the demands of new services. For example, the above communication system may also support XR services, which may include augmented reality (AR) and/or virtual reality (VR). Unlike the three existing typical services, ultra-reliable low-latency communications (URLLC), enhanced mobile broadband (eMBB), and enhanced machine-type communication (eMTC), XR services exhibit characteristics of periodicity, high throughput requirements, and short latency demands, and requires more flexible management of the CG resource.

FIG. 2 is a flow chart illustrating a method for determining a resource state according to an illustrative embodiment. The method may be performed by the terminal in the aforementioned communication system. As shown in FIG. 2, the method may include the following steps.

In step S201, it is determined whether the terminal sends first indication information to a network device.

The first indication information may indicate a resource usage state of at least one CG resource. For example, the first indication information may indicate resource usage states of N CG resources, in which N may be any natural number.

The CG resource may be a resource allocated by the network device to the terminal based on a CG transmission scheme. For example, the network device may allocate one or more CG periods (one CG period may also be referred to as a set of CG configurations) to the terminal, and one CG period may include one or more CG resources.

In some embodiments, the CG resource may be a CG PUSCH TR, or a CG PUSCH TO, or a CG PUSCH occasion, or a CG transmission occasion, or a transmission occasion.

In other embodiments, the CG resource may also be a CG TO group, and one CG TO group may include one or more CG TOs.

The resource usage state of a CG resource may be a used state or an unused state. The unused state may also be referred to as an idle state, and the used state may also be referred to as a non-idle state.

In some embodiments, the terminal does not use the CG resource in the unused state, or the terminal does not use the CG resource in the unused state until the indication information is updated.

The first indication information may be referred to as dynamic indication information, uplink dynamic indication information, or uplink indication information.

The first indication information may be carried by uplink control information (UCI). For example, the first indication information may be included in the UCI. The first indication information may occupy a single UCI alone, or it may be multiplexed within the same UCI together with other control information sent by the terminal. The UCI may be a new UCI or a CG-UCI, and it may be carried by CG PUSCH and sent via any one or several CG resources.

In some embodiments, the first indication information may be multiplexed on PUSCH, and the PUSCH carrying the indication information may be any CG resource (CG TO) within a CG period.

In some embodiments, the first indication information may be a bitmap, the bitmap may include one or more first information bits, one first information bit may correspond to one or more CG resources, that is, one first information bit may indicate the resource usage state of one or more CG resources.

In some embodiments, the terminal may send the first indication information to the network device in a case where it is determined that the terminal sends the first indication information to the network device to improve the flexibility of the CG resource utilization. Similarly, the network device may receive the first indication information in a case where it is determined that the terminal sends the first indication information to the network device.

In other embodiments, the terminal may not send the first indication information to the network device in a case where it is determined that the terminal does not send the first indication information to the network device, thereby saving wireless resource consumption caused by reporting the first indication information. Similarly, the network device may not receive the first indication information in a case where it is determined that the terminal does not send the first indication information to the network device.

Using the above method, it is determined whether the terminal sends the first indication information to the network device, and the first indication information indicates the resource usage state of at least on CG resource. In this way, the terminal may send the first indication information more flexibly, thereby reducing the resource overhead caused by the first indication information.

In some embodiments of the present disclosure, there are multiple ways to determine whether the terminal sends first indication information to the network device, for example:
In an implementation, the terminal may determine that the terminal is able or requires to send the first indication information to the network device in a case where the CG resource is configured. Optionally, the terminal may send the first indication information on each CG resource, or the terminal may send the first indication information on each CG resource that needs to send an uplink service or a signaling, or the terminal may send the first indication information on first K CG resources of each CG period, in which K may be any natural number, such as 1 or 2.

In another implementation, the terminal may determine to send the first indication information to the network device in a case where a resource occupancy state of the CG resource changes.

In another implementation, the terminal may determine whether to send the first indication information based on the number of CG resources configured within the CG period. For example, in a case where the number of CG resources configured within the CG period is greater than or equal to a resource number threshold, the terminal may send the first indication information. Optionally, the terminal may send the first indication information on each CG resource, or the terminal may send the first indication information on each CG resource that needs to send the uplink service or the signaling, or the terminal may send the first indication information on the first K CG resources of each CG period, in which K may be any natural number, such as 1 or 2.

Optionally, in a case where the number of CG resources configured within the CG period is greater than or equal to a preset value, the terminal may send the first indication information on each CG resource with an initial transmission.

Optionally, in a case where the number of CG resources configured within the CG period is greater than or equal to a preset value, the terminal may send the first indication information on a CG resource without a retransmission, and may not send the first indication information on a CG resource with the retransmission.

Optionally, in a case where the number of CG resources configured within the CG period is greater than or equal to a preset value, the terminal may send the first indication information on each CG resource with the initial transmission or the retransmission.

It should be noted that a threshold for the number of resources may be any natural number predefined by a protocol, or any natural number determined and sent by the network device to the terminal, or any natural number determined and sent by the terminal to the network device. For example, a threshold for the number of resources may be 1, 2, 4 or 8.

FIG. 3 is a flow chart illustrating a method for determining a resource state according to an illustrative embodiment. The method may be performed by the terminal in the aforementioned communication system. As shown in FIG. 3, the method may include the following steps.

In step S301, the terminal receives a first message sent by a network device.

The first message may be used for the terminal to determine whether to send first indication information.

The first message may be any one of an RRC message, a MAC CE, DCI, or other message sent by the network device to the terminal.

In step S302, the terminal determines whether to send the first indication information to the network device based on the first message.

In some embodiments, the first message may include a first parameter, which may be one or more bits. In a case where a value of the first parameter is a first value, the terminal is able or requires to send the first indication information, for example, after receiving the first message, the terminal may send the first indication information on a CG resource that actually performs a transmission. In a case where the value of the first parameter is a second value, the terminal may not or does not need to send the first indication information, for example, after receiving the first message, the terminal does not send the first indication information on the CG resource that actually performs the transmission. The first value and the second value may be any values preset in the protocol. The first value and the second value are not equal. For example, the first value is 1 and the second value is 0; or the first value is 0 and the second value is 1.

In this way, the terminal may determine whether to send the first indication information based on the first message received from the network device. Therefore, based on control of the network device, the first indication information may be flexibly sent or not, and the resource overhead brought by the first indication information may be reduced.

In other embodiments of the present disclosure, the terminal may determine whether to send the first indication information based on first device information or protocol predefined information. The first device information may be information related to the network device itself. For example, the first device information may include at least one of:
a first configuration parameter preconfigured by the terminal, the first configuration parameter may be used to determine whether to send the first indication information. For example, if a value of the first configuration parameter is a first value, the terminal is able or requires to send the first indication information; if the value of the first configuration parameter is a second value, the terminal cannot or need not to send the first indication information;
terminal capability information corresponding to the terminal, the terminal capability information may indicate whether the terminal has a capability to send the first indication information, or indicate whether the terminal has a capability to report the resource usage state of the CG resource. The terminal capability information may be at least one parameter of all the terminal capability information of the terminal; for example, it may be one or more bits of all the terminal capability information; or
service information corresponding to the terminal, the service information may include a service type of a service currently or to be performed by the terminal. For example, if the service information indicates that the service currently performed by the terminal is an XR service, the terminal is able or requires to send the first indication information. For another example, if the service information indicates that the service currently performed by the terminal is a video service, the terminal cannot or need not send the first indication information. For another example, if the service information indicates that the service currently performed by the terminal is an upload service, the terminal cannot or need not send the first indication information.

The aforementioned predefined protocol information may include a protocol version of the terminal or the network device. For example, if the protocol version is less than a preset version number, the terminal cannot or need not to send the first indication information; if the protocol version is greater than or equal to the preset version number, the terminal is able or requires to send the first indication information. The preset version number may be any preset protocol version number, such as Release 18 or other protocol version numbers.

In an implementation, the first device information may be any one of the first configuration parameter preconfigured by the terminal, the terminal capability information of the terminal, the protocol predefined information of the terminal, or the service information of the terminal. The terminal may determine whether to send the first indication information based on any one of the first configuration parameter, the terminal capability information, the service information, or the protocol predefined information.

In another implementation, the first device information may include any combination of the following: the first configuration parameter preconfigured by the terminal, the terminal capability information of the terminal, or the service information of the terminal. The terminal may determine whether to send the first indication information based on any combination of the following: the first configuration parameters, the terminal capability information, the service information, or the protocol predefined information.

For example, if the terminal determines that it is able or requires to send the first indication information based on any of the above information, the terminal may send the first indication information.

For another example, if the terminal determines that it cannot or does not need to send the first indication information based on any of the above information, the terminal does not send the first indication information.

For another example, if the terminal determines that it is able or requires to send the first indication information based on multiple pieces of the above information, the terminal sends the first indication information.

FIG. 4 is a flow chart illustrating a method for determining a resource state according to an illustrative embodiment. The method may be performed by the terminal in the aforementioned communication system. As shown in FIG. 4, the method may include the following steps.

In step S401, the terminal sends a second message to a network device.

The second message is used for the network device to determine whether the terminal sends first indication information.

The second message may be any of an RRC message, a UCI, or any other message sent by the terminal to the network device.

In some embodiments, the terminal determines whether the terminal sends the first indication information to the network device, and sends the second message to the network device.

The network device may determine whether the terminal sends the first indication information to the network device based on the second message.

In some embodiments, the second message may include a second parameter, which may be one or more bits. In a case where a value of the second parameter is a first value, the terminal is able or requires to send the first indication information. For example, after receiving the second message, the network device may receive the first indication information on a CG resource that actually performs a transmission. In a case where the value of the second parameter is a second value, the terminal cannot or need not to send the first indication information, for example, after receiving the first message, the network device need not to receive the first indication information. The first value and the second value may be any values preset in the protocol. The first value and the second value are not equal. For example, the first value is 1 and the second value is 0; or the first value is 0 and the second value is 1.

In this way, the terminal may send the second message to the network device to indicate the network device to determine whether the terminal sends the first indication information. Therefore, sending or not sending of the first indication message may be flexibly controlled, and the resource overhead brought by the first indication message may be reduced.

FIG. 5 is a flow chart illustrating a method for determining a resource state according to an illustrative embodiment. The method may be performed by the terminal in the aforementioned communication system. As shown in FIG. 5, the method may include the following steps.

In step S501, the terminal sends terminal capability information to a network device.

The terminal capability information may be used for the network device to determine whether the terminal sends first indication information.

For example, the terminal may send the terminal capability information to the network device during its network registration, and the network device may also obtain the terminal capability information during the terminal's network registrations.

In some embodiments, the terminal may only send the terminal capability information during its network registration, and may not need to send the terminal capability information again when establishing a wireless connection after the registration, and the network device may obtain the terminal capability information by other means. For example, in a case where the network device includes a core network device and an access network device, the core network device may store the terminal capability information of the terminal and send the terminal capability information to the access network device, and the access network device may receive the terminal capability information. For another example, the access network device may also store the terminal capability information of the terminal.

In this way, the terminal may determine whether to send the first indication information based on the terminal capability information, and the network device may also determine whether to receive the first indication information based on the terminal capability information, thereby flexibly controlling whether to send the first indication message.

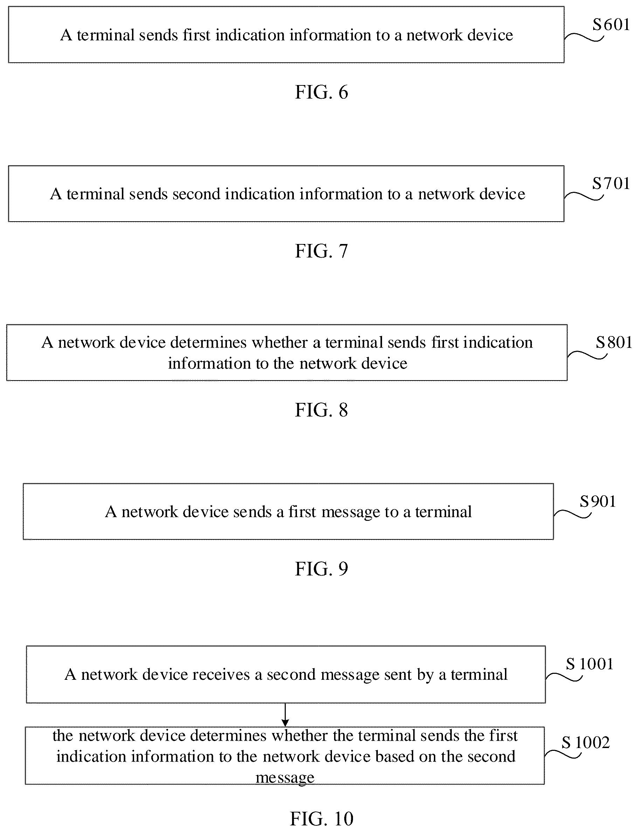

FIG. 6 is a flow chart illustrating a method for determining a resource state according to an illustrative embodiment. The method may be performed by the terminal in the aforementioned communication system. As shown in FIG. 6, the method may include the following steps.

In step S601, the terminal sends first indication information to a network device.

The first indication information indicates a resource usage state of at least one CG resource.

In some embodiments, the terminal may send the first indication information to the network device in a case where it is determined that the terminal sends the first indication information to the network device, thereby improving the use flexibility of the CG resource.

In other embodiments, the terminal may not send the first indication information to the network device in a case where it is determined that the terminal does not send the first indication information to the network device, thereby saving wireless resource consumption caused by reporting the first indication information.

It should be noted that, without contradiction, this embodiment may be combined with the aforementioned embodiments or implementations of the present disclosure and various alternatives thereof. For example, in this embodiment, the specific method for determining whether the terminal sends the first indication information to the network device may refer to the description in the foregoing embodiment of the present disclosure, and will not be repeated here.

In some other embodiments, the terminal may send the first indication information to the network device in a case where the CG resource is configured. For example, the terminal may send the first indication information on each CG resource, or the terminal may send the first indication information on each CG resource that needs to send an uplink service or a signaling, or the terminal may send the first indication information on first K CG resources of each CG period, in which K may be any natural number, such as 1 or 2.

In some other embodiments, the terminal may send the first indication information to the network device in a case where a resource occupancy state of the CG resource changes. For example, the terminal may send the first indication information to the network device in a case where the resource occupancy state of any CG resource changes during a CG period (e.g., from a used state to an unused state, or from an unused state to a used state).

In some embodiments, the first indication information may be carried by a third message. For example, the terminal may send the third message to the network device, and the third message may include the first indication information. The third message may be any of an RRC message, a UCI, or any other message sent by the terminal to the network device.

In this way, the terminal may flexibly control whether to send the first indication information.

FIG. 7 is a flow chart illustrating a method for determining a resource state according to an illustrative embodiment. The method may be performed by the terminal in the aforementioned communication system. As shown in FIG. 7, the method may include the following steps.

In step S701, the terminal sends second indication information to a network device.

The second indication information is used for the network device to determine at least one CG period.

In some embodiments, the CG resource indicated by the first indication information may be a resource in the at least one CG period indicated by the second indication information.

For example, the network device configures the terminal with four CG periods: a CG period 0, a CG period 1, a CG period 2 and a CG period 3. The terminal uses the second indication information to indicate the network device to determine at least one of these CG periods, such as the CG period 1. The terminal may also use the first indication information to indicate the resource usage state of at least one CG resource in the CG period 1.

In some embodiments, the second indication information may be carried by a fourth message. For example, the terminal may send the fourth message to the network device, and the fourth message may include the second indication information. The third message may be any of an RRC message, a UCI, or any other message sent by the terminal to the network device. The fourth message may be the same as or different from the third message.

In an implementation, the second indication information and the first indication information may both be carried in the UCI.

In some embodiments, the second indication information includes at least one second information bit, and one second information bit may correspond to the at least one CG period.

For example, the second indication information may be a bitmap, and one second information bit in the second indication information may correspond to one CG period.

For example, the network device configures the terminal with four CG periods: a CG period 0, a CG period 1, a CG period 2 and a CG period 3. In a case where a bitmap corresponding to the second indication information is 1010, the first indication information may indicate the resource usage state of the CG resources in the CG period 0 and the CG period 2.

In other embodiments, the second indication information includes at least one CG index, and each CG index is used to indicate one CG period.

For example, the second indication information may include one CG index, and the one CG index may indicate one CG period configured by the network device for the terminal.

For example, the network device configures the terminal with four CG periods: a CG period 0 (a corresponding CG index is 0), a CG period 1 (a corresponding CG index is 1), a CG period 2 (a corresponding CG index is 2) and a CG period 3 (a corresponding CG index is 3). In a case where the second indication information includes one CG index of 3, the first indication information may indicate the resource usage state of the CG resource in the CG period 3.

For another example, the second indication information may include multiple CG indexes, and each CG index may indicate one CG period configured by the network device for the terminal.

For example, the network device configures the terminal with four CG periods: a CG period 0 (a corresponding CG index is 0), a CG period 1 (a corresponding CG index is 1), a CG period 2 (a corresponding CG index is 2) and a CG period 3 (a corresponding CG index is 3). In a case where the second indication information includes three CG indexes of 0, 1 and 3 respectively, the first indication information may indicate the resource usage state of the CG resources in the CG period 0, the CG period 1 and the CG period 3.

In some embodiments of the present disclosure, the terminal may send first indication information and second indication information to the network device.

The first indication information may indicate the resource usage state of the at least one CG resource, and the second indication information may indicate the network device to determine at least one CG period, and the at least one CG resource is a resource within the at least one CG period.

The first indication information and the second indication information may be carried by the same message, for example, they may be carried in the same UCI.

It should be noted that, without contradiction, this embodiment may be combined with the aforementioned embodiments or implementations of the present disclosure and various alternatives thereof. For example, in this embodiment, the specific method for determining whether the terminal sends the first indication information to the network device may refer to the description in the foregoing embodiment of the present disclosure, and will not be repeated here.

In this way, the resource usage state of a corresponding CG resource may be determined by the first indication information and the second indication information.

FIG. 8 is a flow chart illustrating a method for determining a resource state according to an illustrative embodiment. The method may be performed by the network device in the aforementioned communication system. As shown in FIG. 8, the method may include the following steps.

In step S801, the network device determines whether a terminal sends first indication information to the network device.

The first indication information indicates a resource usage state of at least one CG resource. For example, the first indication information may indicate resource usage states of N CG resources, in which N may be any natural number.

It should be noted that, for the specific implementation of the first indication information and the CG resource, please refer to the specific description in the aforementioned embodiments of the present disclosure, which will not be repeated here.

In some embodiments, the network device may not receive the first indication information in a case where it is determined that the terminal sends the first indication information to the network device. For example, the terminal sends the first indication information through the CG resource, and the network device may obtain the first indication information by demodulating a wireless signal received through the CG resource. Similarly, the terminal may send the first indication information to the network device in a case where it is determined that the terminal sends the first indication information to the network device.

The network device may need not to receive the first indication information in a case where it is determined that the terminal does not send the first indication information to the network device. For example, the network device need not to demodulate the first indication information from the wireless signal received through the CG resource, which may reduce the overhead of the network device. Similarly, the terminal may not send the first indication information to the network device in a case where it is determined that the terminal does not send the first indication information to the network device.

Using the above methods, it is determined whether the terminal sends the first indication information to the network device; and the first indication information indicates the resource usage state of at least one CG resource. In this way, the terminal may send the first indication information more flexibly, and the network device may also receive the first indication information more flexibly, thereby reducing the resource overhead caused by the first indication information.

In some embodiments of the present disclosure, the network device may determine whether the terminal sends the first indication information to the network device in various ways, for example:
In an implementation, the network device may determine that the terminal sends the first indication information to the network device in a case where the CG resource is configured for the terminal. The network device may receive the first indication information. Optionally, the network device may receive the first indication information on each CG resource, or the network device may receive the first indication information on each CG resource that needs to send an uplink service or a signaling, or the network device may receive the first indication information on first K CG resources of each CG period, in which K may be any natural number, such as 1 or 2.

In another implementation, the network device may determine that the terminal sends the first indication information to the network device in a case where a resource occupancy state of the CG resource changes.

In another implementation, the network device may determine whether the terminal sends the first indication information to the network device based on the number of CG resources configured within the CG period. For example, in a case where the number of CG resources configured within the CG period is greater than or equal to a resource number threshold, the network device may determine that the terminal sends the first indication information to the network device. The network device may also receive the first indication information. Optionally, the network device may receive the first indication information on each CG resource, or the network device may receive the first indication information on each CG resource that needs to send the uplink service or the signaling, or the network device may receive the first indication information on the first K CG resources of each CG period, in which K may be any natural number, such as 1 or 2.

Optionally, in a case where the number of CG resources configured within the CG period is greater than or equal to a preset value, the network device may send the first indication information on each CG resource with an initial transmission. The terminal may send the first indication information on each CG resource with the initial transmission; similarly, the network device may also receive the first indication information on each CG resource with the initial transmission.

Optionally, in a case where the number of CG resources configured within the CG period is greater than or equal to the preset value, the network device may determine that the terminal sends the first indication information on a CG resource without a retransmission, and does not send the first indication information on a CG resource with the retransmission. The terminal may send the first indication information on the CG resource without the retransmission, and does not send the first indication information on the CG resource with the retransmission; similarly, the network device may receive the first indication information on the CG resource without the retransmission, and does not receive the first indication information on the CG resource with the retransmission.

Optionally, in a case where the number of CG resources configured within the CG period is greater than or equal to the preset value, the network device may determine that the terminal sends the first indication information on each CG resource with the initial transmission or the retransmission. The terminal may send the first indication information on each CG resource with the initial transmission or the retransmission; similarly, the network device may receive the first indication information on each CG resource with the initial transmission or the retransmission.

It should be noted that the above-mentioned resource number threshold may be any natural number predefined by a protocol, or any natural number determined and sent by the network device to the terminal, or any natural number determined and sent by the terminal to the network device. For example, the resource number threshold may be 1, 2, 4 or 8.

In some embodiments of the present disclosure, the network device may determine whether the terminal sends the first indication information to the network device based on second device information or protocol predefined information. The second device information may be information related to the network device itself, or information related to the terminal obtained by the network device. For example, the second device information may include at least one of:
a second configuration parameter preconfigured by the network device, the second configuration parameter may be used to determine whether the terminal sends the first indication information. For example, if a value of the second configuration parameter is a first value, the terminal is able or requires to send the first indication information; if the value of the second configuration parameter is a second value, the terminal cannot or need not to send the first indication information;
terminal capability information corresponding to the terminal, the terminal capability information may indicate whether the terminal has a capability to send the first indication information, or indicate whether the terminal has a capability to report the resource usage state of the CG resource. The terminal capability information may be at least one parameter of all the terminal capability information of the terminal; for example, it may be one or more bits of all the terminal capability information. It should be noted that network device may receive the terminal capability information reported by the terminal; or
service information corresponding to the terminal, the service information may include a service type of a service currently or to be performed by the terminal, For example, if the service information indicates that the service currently performed by the terminal is an XR service, the terminal is able or requires to send the first indication information. For another example, if the service information indicates that the service currently performed by the terminal is a video service, the terminal cannot or need not send the first indication information. For another example, if the service information indicates that the service currently performed by the terminal is an upload service, the terminal cannot or need not send the first indication information. It should be noted that network device may receive the service information reported by the terminal, or the network device may determine the service information based on a signaling or data of the terminal.

The aforementioned predefined protocol information may include a protocol version of the network device or the terminal. For example, if the protocol version is less than a preset version number, the terminal cannot or need not to send the first indication information; if the protocol version is greater than or equal to the preset version number, the terminal is able or requires to send the first indication information. The preset version number may be any preset protocol version number, such as Release 18 or other protocol version numbers.

In an implementation, the second device information may be any one of second configuration parameter preconfigured by the network device, terminal capability information of the terminal, or service information of the terminal. The network device may determine whether the terminal sends the first indication information based on any one of the second configuration parameter, the terminal capability information, the service information, or the protocol predefined information.

In another implementation, the second device information may include any combination of the following: the second configuration parameter preconfigured by the network device, the terminal capability information of the terminal, or the service information of the terminal. The network device may determine whether the terminal sends the first indication information based on any combination of the following: the second configuration parameters, the terminal capability information, the service information, or the protocol predefined information.

For example, if the network device determines that the terminal sends the first indication information based on any of the above information, the network device may receive the first indication information.

For example, if the terminal determines that the terminal does not send the first indication information based on any of the above information, it may be determined that the terminal does not send the first indication information, and the network device may not receive the first indication information.

For example, if the terminal determines that the terminal sends the first indication information based on multiple pieces of the above information, it may be determined that the terminal sends the first indication information.

FIG. 9 is a flow chart illustrating a method for determining a resource state according to an illustrative embodiment. The method may be performed by the network device in the aforementioned communication system. As shown in FIG. 9, the method may include the following steps.

In step S901, the network device sends a first message to a terminal.

The first message may be used for the terminal to determine whether to send first indication information.

It should be noted that the specific implementation of the first message and the above steps may refer to the description in the embodiments shown in FIG. 3 of the present disclosure, and will not be repeated here.

In this way, the network device may indicate the terminal whether to send the first indication information through the first message. Therefore, the terminal may be controlled to flexibly send or not send the first indication information, and the resource overhead brought by the first indication information may be reduced.

FIG. 10 is a flow chart illustrating a method for determining a resource state according to an illustrative embodiment. The method may be performed by the network device in the aforementioned communication system. As shown in FIG. 10, the method may include the following steps.

In step S1001, the network device receives a second message sent by a terminal.

The second message may be used by the network device to determine whether the terminal sends first indication information.

In step S1002, the network device determines whether the terminal sends the first indication information to the network device based on the second message.

It should also be noted that the specific implementation of the first message and the above steps may refer to the description in the embodiment shown in FIG. 4 of the present disclosure, and will not be repeated here.

In this way, the network device may receive the second message and determine whether the terminal sends the first indication information. Therefore, the terminal may be controlled to flexibly send or not send the first indication information, and the resource overhead brought by the first indication information may be reduced.

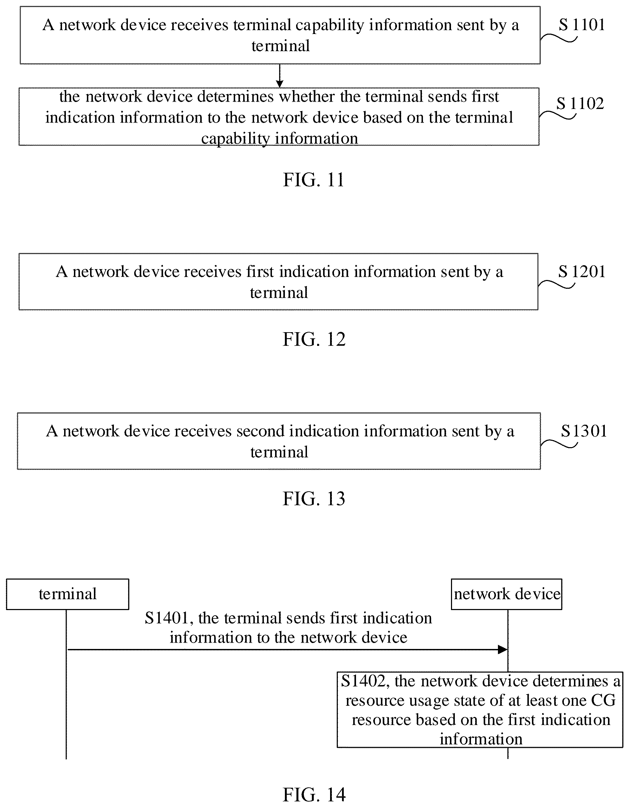

FIG. 11 is a flow chart illustrating a method for determining a resource state according to an illustrative embodiment. The method may be performed by the network device in the aforementioned communication system. As shown in FIG. 11, the method may include the following steps.

In step S1101, the network device receives terminal capability information sent by a terminal.

In step S1102, the network device determines whether the terminal sends first indication information to the network device based on the terminal capability information.

It should also be noted that the specific implementation of the terminal capability information and the above steps may refer to the description in the embodiment shown in FIG. 5 of the present disclosure, and will not be repeated here.

In this way, the network device may determine whether the terminal sends the first indication information based on the terminal capability information, or whether to receive the first indication information based on the terminal capability information, thereby flexibly controlling whether to send the first indication information.

FIG. 12 is a flow chart illustrating a method for determining a resource state according to an illustrative embodiment. The method may be performed by the network device in the aforementioned communication system. As shown in FIG. 12, the method may include the following steps.

In step S1201, the network device receives first indication information sent by a terminal.

The first indication information indicates a resource usage state of at least one CG resource.

In some embodiments, the network device may receive the first indication information sent by the terminal in a case where it is determined that the terminal sends the first indication information to the network device, thereby improving the use flexibility of the CG resource.

In other embodiments, the network device may not receive the first indication information sent by the terminal in a case where it is determined that the terminal does not send the first indication information to the network device, thereby saving a wireless resource consumption caused by transmitting and reporting the first indication information.

It should be noted that, without contradiction, this embodiment may be combined with the aforementioned embodiments or implementations of the present disclosure and their various optional solutions. The specific implementation of the above steps in this embodiment may also refer to the description in the aforementioned embodiments of the present disclosure, and will not be repeated here.

It should also be noted that the specific implementation of the terminal sending the first indication information may also refer to the description in the aforementioned embodiments of the present disclosure, and will not be repeated here.

In this way, the network device may flexibly receive the first indication information, and the terminal may also flexibly control whether to send the first indication information.

FIG. 13 is a flow chart illustrating a method for determining a resource state according to an illustrative embodiment. The method may be performed by the network device in the aforementioned communication system. As shown in FIG. 13, the method may include the following steps.

In step S1301, the network device receives second indication information sent by a terminal.

The second indication information is used for the network device to determine at least one CG period.

In some embodiments, a CG resource indicated by first indication information may be a resource within at least one CG period indicated by the second indication information.

In some embodiments, the network device may receive first indication information and second indication information sent by the terminal.

It should be noted that, without contradiction, this embodiment may be combined with the aforementioned embodiments or implementations of the present disclosure and their various optional solutions. The specific implementation of the above steps in this embodiment may also refer to the description in the aforementioned embodiments of the present disclosure, and will not be repeated here.

In this way, the resource usage state of the corresponding CG resource may be determined by the first indication information and the second indication information.

FIG. 14 is a flow chart illustrating a method for determining a resource state according to an illustrative embodiment. The method may be performed by the network device in the aforementioned communication system. As shown in FIG. 14, the method may include the following steps.

In step S1401, a terminal sends first indication information to the network device.

In step S 1402, the network device determines a resource usage state of at least one CG resource based on the first indication information.

In some embodiments, the terminal may send the first indication information to the network device in a case where it is determined that the terminal sends the first indication information to the network device to improve the use flexibility of the CG resource. Similarly, the network device may also receive the first indication information in a case where it is determined that the terminal sends the first indication information to the network device.

In some embodiments, the terminal may also send second indication information to the network device, and the network device may determine a CG period based on the second indication information.

It should be noted that, without contradiction, this embodiment may be combined with the aforementioned embodiments or implementations of the present disclosure and their various optional solutions. The specific implementation of the above steps in this embodiment may also refer to the description in the aforementioned embodiments of the present disclosure, and will not be repeated here.

In this way, the terminal and the network device may more flexibly control whether the first indication information is transmitted, thereby reducing the resource overhead caused by the first indication information.

In an illustrative embodiment, the present disclosure also provides a communication system, which may include a terminal and a network device, in which the terminal may perform the method for determining the resource state performed by the terminal in the aforementioned embodiments of the present disclosure; the network device may perform the method for determining the resource state performed by the network device in the aforementioned embodiments of the present disclosure.

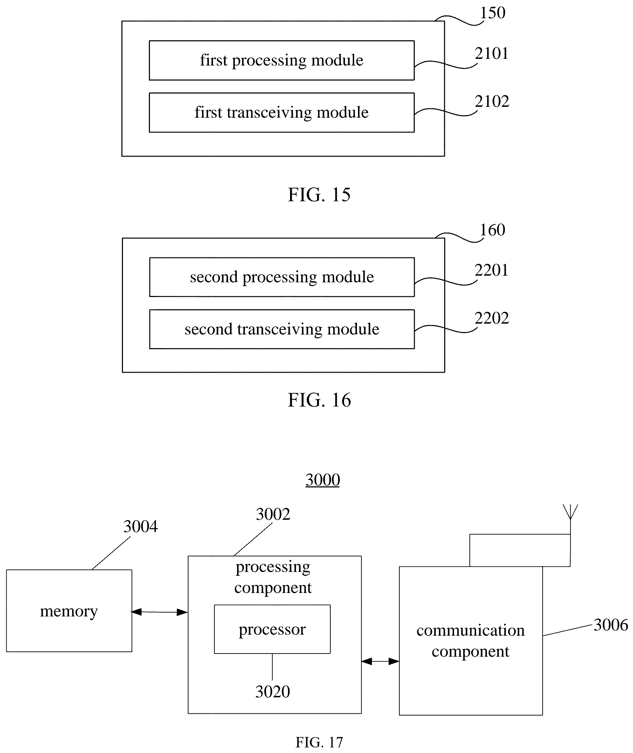

FIG. 15 is a block diagram illustrating a terminal according to an illustrative embodiment. As shown in FIG. 15, the terminal 150 may include:
a first processing module 2101 configured to determine whether the terminal sends first indication information to a network device, in which the first indication information indicates a resource usage state of at least one CG resource.

In some embodiments, the first processing module 2101 is configured to determine whether to send the first indication information based on a first message received from the network device, in which the first message is used for the terminal to determine whether to send the first indication information.

In some embodiments, the terminal further includes:
a first transceiving module 2102 configured to send a second message to the network device, in which the second message is used for the network device to determine whether the terminal sends the first indication information.

In some embodiments, the first processing module 2101 is configured to determine whether to send the first indication information based on first device information or protocol predefined information, in which the first device information includes at least one of:
a first configuration parameter preconfigured by the terminal;
terminal capability information of the terminal; or
service information of the terminal.

In some embodiments, the second message includes terminal capability information.

In some embodiments, the first transceiving module 2102 is configured to send second indication information to the network device, in which the second indication information is used for the network device to determine at least one CG period.

In some embodiments, the second indication information includes at least one second information bit, and one second information bit corresponds to the at least one CG period.

In some embodiments, the second indication information includes at least one CG index, and each CG index is used to indicate one CG period.

In some embodiments, the first transceiving module 2102 is configured to send the first indication information to the network device in a case where it is determined that the terminal sends the first indication information to the network device.

In some embodiments, the CG resource is a CG transmission occasion or a CG transmission occasion group, and the CG transmission occasion group includes a plurality of CG transmission occasions.

FIG. 16 is a block diagram illustrating a network device according to an illustrative embodiment. As shown in FIG. 16, the network device 160 may include:
a second processing module 2201 configured to determine whether a terminal sends first indication information to the network device, in which the first indication information indicates a resource usage state of at least one CG resource.

In some embodiments, the network device further includes:
a second transceiving module 2202 configured to send a first message to the terminal, in which the first message is used for the terminal to determine whether to send the first indication information.

In some embodiments, the second processing module 2201 is configured to determine whether the terminal sends the first indication information to the network device based on a second message received from the terminal.

In some embodiments, the second processing module 2201 is configured to determine whether the terminal sends the first indication information to the network device based on second device information or protocol predefined information, in which the second device information includes at least one of:
a second configuration parameter preconfigured by the network device;
terminal capability information corresponding to the terminal; or
service information corresponding to the terminal.

In some embodiments, the second message includes terminal capability information of the terminal.

In some embodiments, the second transceiving module 2202 is configured to receive second indication information sent by the terminal, in which the second indication information is used for the network device to determine at least one CG period.

In some embodiments, the second indication information includes at least one second information bit, and one second information bit corresponds to the at least one CG period.

In some embodiments, the second indication information includes at least one CG index, and each CG index is used to indicate one CG period.

In some embodiments, the second transceiving module 2202 is configured to receive the first indication information sent by the terminal in a case where it is determined that the terminal sends the first indication information to the network device.

In some embodiments, the CG resource is a CG transmission occasion or a CG transmission occasion group, and the CG transmission occasion group includes a plurality of CG transmission occasions.

With respect to the devices in the above embodiments, the specific manners for performing operations for individual modules therein have been described in detail in the embodiments regarding the method for determining a resource state, which will not be elaborated herein.

FIG. 17 is a block diagram illustrating a communication device according to an illustrative embodiment. The communication device 3000 may be a terminal in the communication system shown in FIG. 1, or may be a network device in the communication system.

Referring to FIG. 17, the communication device 3000 may include one or more of the following components: a processing component 3002, a memory 3004, and a communication component 3006.

The processing component 3002 typically controls overall operations of the communication device 3000, such as the operations associated with display, phone calls, data communications, camera operations, and recording operations. The processing component 3002 may include one or more processors 3020 to execute instructions to perform all or some of the steps in the above-described method for determining the resource state. Moreover, the processing component 3002 may include one or more modules which facilitate the interaction between the processing component 3002 and other components. For instance, the processing component 3002 may include a multimedia module to facilitate the interaction between the multimedia component and the processing component 3002.

The memory 3004 is configured to store various types of data to support the operation of the communication device 3000. Examples of such data include instructions for any applications or methods operated on the communication device 3000, contact data, phonebook data, messages, pictures, videos, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The communication component 3006 is configured to facilitate communication, wired or wireless, between the communication device 3000 and other devices. The communication device 3000 may access a wireless network based on a communication standard, such as Wi-Fi, 2G, 3G, 4G, 5G, 6G, NB-IOT, or eMTC, or a combination thereof. In an illustrative embodiment, the communication component 3006 receives a broadcast signal or broadcast associated information from an external broadcast management system via a broadcast channel. In an illustrative embodiment, the communication component 3006 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the communication device 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the method for determining the resource state in the above-mentioned embodiments.

The communication device 3000 may be an independent electronic device or a part of an independent electronic device. For example, in an embodiment, the electronic device may be an integrated circuit (IC) or a chip, in which the integrated circuit may be one IC or a collection of a plurality of ICs. The chip may include, but is not limited to, a graphics processing unit (GPU), a central processing unit (CPU), a field programmable gate array (FPGA), a digital signal processor (DSP), an application specific integrated circuit (ASIC), a system on chip (SoC) and the like. The above-described integrated circuit or chip may be used to execute executable instructions (or a code) to implement the above-described method for determining the resource state. The executable instructions may be stored in the integrated circuit or chip or may be obtained from other apparatus or devices. For example, the integrated circuit or chip includes a processor, a memory, and an interface for communicating with other devices. The executable instructions may be stored in the processor and, when executed by the processor, implement the method for determining the resource state described above. Optionally, the integrated circuit or chip may receive the executable instructions through the interface and send the executable instructions to the processor for execution to implement the method for determining the resource state described above.

In an illustrative embodiment, the present disclosure also provides a computer-readable storage medium having stored thereon computer program instructions that, when executed by a processor, implement the steps of the method for determining the resource state provided by the present disclosure. For example, the computer-readable storage medium may be a non-transitory computer-readable storage medium including instructions, for example, may be the above-described memory 3004 including instructions executable by the processor 3020 of the communication device 3000 to complete the above-described method for determining the resource state. For example, the non-transitory computer-readable storage medium may be a ROM, a RAM, a CD-ROM, a magnetic tape, a floppy disc, an optical data storage device, and the like.

In another illustrative embodiment, there is also provided a computer program product including a computer program executable by a programmable apparatus, the computer program having code portions for performing the above-described method for determining the resource state when executed by the programmable apparatus.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A method for determining a resource state, performed by a terminal, comprising:
determining whether the terminal sends first indication information to a network device, wherein the first indication information indicates a resource usage state of at least one configured grant (CG) resource.

2. The method of claim 1, wherein determining whether the terminal sends the first indication information to the network device comprises:
determining, based on a first message received from the network device, whether to send the first indication information, wherein the first message is used for the terminal to determine whether to send the first indication information.

3. The method of claim 1, further comprising:
sending a second message to the network device, wherein the second message is used for the network device to determine whether the terminal sends the first indication information.

4. The method of claim 1, wherein determining whether the terminal sends the first indication information to the network device comprises:
determining, based on first device information or protocol predefined information, whether to send the first indication information, wherein the first device information comprises at least one of:
a first configuration parameter preconfigured by the terminal;
terminal capability information of the terminal; or
service information of the terminal.

5. The method of claim 3, wherein the second message comprises terminal capability information.

6. The method of claim 1, further comprising:
sending second indication information to the network device, wherein the second indication information is used for the network device to determine at least one CG period.

7. The method of claim 6, wherein the second indication information comprises at least one second information bit, and one second information bit corresponds to the at least one CG period.

8. The method of claim 6, wherein the second indication information comprises at least one CG index, and each CG index is used to indicate one CG period.

9. The method of any one of claims 1 to 8, further comprising:
sending the first indication information to the network device in a case where it is determined that the terminal sends the first indication information to the network device.

10. The method of any one of claims 1 to 8, wherein the CG resource is a CG transmission occasion or a CG transmission occasion group, and the CG transmission occasion group comprises a plurality of CG transmission occasions.

11. A method for determining a resource state, performed by a network device, comprising:
determining whether a terminal sends first indication information to the network device, wherein the first indication information indicates a resource usage state of at least one configured grant (CG) resource.

12. The method of claim 11, further comprising:
sending a first message to the terminal, wherein the first message is used for the terminal to determine whether to send the first indication information.

13. The method of claim 11, wherein determining whether the terminal sends the first indication information to the network device comprises:
determining, based on a second message received from the terminal, whether the terminal sends the first indication information to the network device..

14. The method of claim 11, wherein determining whether the terminal sends the first indication information to the network device comprises:
determining, based on second device information or protocol predefined information, whether the terminal sends the first indication information to the network device, wherein the second device information comprises at least one of:
a second configuration parameter preconfigured by the network device;
terminal capability information corresponding to the terminal; or
service information corresponding to the terminal.

15. The method of claim 13, wherein the second message comprises terminal capability information of the terminal.

16. The method of claim 11, further comprising:
receiving second indication information sent by the terminal, wherein the second indication information is used for the network device to determine at least one CG period.

17. The method of claim 16, wherein the second indication information comprises at least one second information bit, and one second information bit corresponds to the at least one CG period.

18. The method of claim 16, wherein the second indication information comprises at least one CG index, and each CG index is used to indicate one CG period.

19. The method of any one of claims 11 to 18, further comprising:
receiving the first indication information sent by the terminal in a case where it is determined that the terminal sends the first indication information to the network device.

20. The method of any one of claims 11 to 18, wherein the CG resource is a CG transmission occasion or a CG transmission occasion group, and the CG transmission occasion group comprises a plurality of CG transmission occasions.

21. A terminal, comprising:
a first processing module configured to determine whether the terminal sends first indication information to a network device, wherein the first indication information indicates a resource usage state of at least one configured grant (CG) resource.

22. A network device, comprising:
a second processing module configured to determine whether a terminal sends first indication information to the network device, wherein the first indication information indicates a resource usage state of at least one configured grant (CG) resource.

23. A communication device, comprising:
a processor; and
a memory for storing processor-executable instructions,
wherein the processor is configured to perform the steps of the method of any one of claims 1 to 10, or the processor is configured to perform the steps of the method of any one of claims 11 to 20.

24. A computer-readable storage medium having stored thereon computer program instructions, wherein the computer program instructions, when executed by a processor, implement the steps of the method of any one of claims 1 to 10, or the computer program instructions, when executed by a processor, implement the steps of the method of any one of claims 11 to 20.

25. A communication system, comprising:
a terminal configured to performs the method of any one of claims 1 to 10; and
a network device configured to performs the method of any one of claims 11 to 20.
